# EUROPEAN PATENT APPLICATION

(11) **EP 4 033 818 A1**
(43) Date of publication of application: **27.07.2022**
(21) Application number: 20899942.5
(22) Date of filing: 13.11.2020
(51) Int. Cl.: H04W 48/16, H04L 12/24

(54) **COMMUNICATION METHOD AND APPARATUS, AND DEVICE**

(30) Priority: 11.12.2019 CN 201911267092
(71) Applicant: Huawei Technologies Co., Ltd., Longgang District, Shenzhen, Guangdong 518129 (CN)
(72) Inventor: ZHANG, Chengchen, Shenzhen, Guangdong 518129 (CN); DING, Hui, Shenzhen, Guangdong 518129 (CN); WU, Wenfu, Shenzhen, Guangdong 518129 (CN)
(74) Representative: Goddar, Heinz J.
(86) International application number: PCT/CN2020/128796
(87) International publication number: WO 2021/115022

(57) **Abstract**

Embodiments of this application provide a communication method and apparatus, and a device. The method includes: A network device determines first user slice information of a first user. The network device sends the first user slice information to a terminal device, where the terminal device is a terminal device used by the first user, and a user slice indicated by the first user slice information is a user slice used by the first user. This improves flexibility of performing communication by using a network slice.

## Description

This application claims priority to Chinese Patent Application No. 201911267092.9, filed with the China National Intellectual Property Administration on December 11, 2019 and entitled "COMMUNICATION METHOD AND APPARATUS, AND DEVICE", which is incorporated herein by reference in its entirety.

### TECHNICAL FIELD

This application relates to the field of communication technologies, and in particular, to a communication method and apparatus, and a device.

### BACKGROUND

To improve network communication efficiency and meet different communication service requirements, a network may be divided into a plurality of network slices, and each network slice provides a corresponding network service.

In an actual application process, a network device may configure, for a terminal device, a network slice corresponding to the terminal device. A plurality of users may use a same terminal device. In a process in which the plurality of users each use the terminal device, the terminal device obtains a service from a network side by using a network slice corresponding to the terminal device. Consequently, flexibility of performing communication by using the network slice is poor.

### SUMMARY

This application provides a communication method and apparatus, and a device, to improve flexibility of performing communication by using a network slice.

According to a first aspect, an embodiment of this application provides a communication method. A network device determines first user slice information of a first user, and sends the first user slice information to a terminal device, where the terminal device is a terminal device used by the first user, and a user slice indicated by the first user slice information is a user slice used by the first user.

In the foregoing process, the network device may obtain the first user slice information of the first user, and send the first user slice information to the terminal device used by the first user, so that when the first user uses the terminal device, the terminal device may obtain a service from a network side by using the user slice indicated by the first user slice information. In this way, in a process in which different users use a same terminal device, the terminal device may obtain a service from a network side by using a user slice of the user (a user currently using the terminal device), to provide different services for the different users. Therefore, flexibility of performing communication by using a network slice is improved.

In a possible implementation, the first user slice information includes user slice information configured for the first user and/or user slice information allowed to be used by the first user.

Both the user slice information configured for the first user and the user slice information allowed to be used by the first user are user slice information that can be used by the first user. Therefore, the first user slice information sent to the terminal device may be user slice information that can be used by the first user.

In a possible implementation, the network device may determine the first user slice information of the first user in the following manner: The network device receives subscribed user slice information of the first user from a first device, and determines the first user slice information based on the subscribed user slice information of the first user.

In the foregoing process, the determined first user slice information may belong to the subscribed user slice information of the first user.

In a possible implementation, before the network device receives the subscribed user slice information of the first user from the first device, the network device sends a first request message to the first device, where the first request message is for requesting to obtain the subscribed user slice information of the first user, and the first request message includes a user identifier of the first user.

In the foregoing process, the first device sends the subscribed user slice information of the first user to the network device only after the network device sends the first request message to the first device. In this way, the first device can be prevented from sending unnecessary user slice information to the network device.

In a possible implementation, the first device is a unified data management UDM network element or an authentication, authorization, and accounting AAA server.

In a possible implementation, before the network device determines the first user slice information of the first user, the network device receives a second request message sent by the terminal device, where the second request message includes the user identifier of the first user, and the second request message is for requesting to obtain the first user slice information of the first user.

In the foregoing process, the network device sends the first user slice information to the terminal device only after the network device receives the second request message sent by the terminal device. In other words, the network device sends the first user slice information to the terminal device only when the terminal device needs the first user slice information, to avoid sending unnecessary user slice information to the terminal device.

In a possible implementation, the second request message further includes second user slice information, and the second user slice information includes one or more of the following information:
preset user slice information in the user slice information configured for the first user;
the user slice information configured for the first user, or a part of the user slice information configured for the first user; and
the user slice information allowed to be used by the first user, or a part of the user slice information allowed to be used by the first user.

In a possible implementation, the second request message further includes an identifier of the terminal device. In this way, when determining the first user slice information, the network device may remove slice information of the terminal device from the first user slice information, so that user slice information in the first user slice information does not include the slice information of the terminal device.

In a possible implementation, the first user slice information is determined by the network device based on the subscribed user slice information of the first user and at least one of the following information:
a registration area of the terminal device;
a user slice supported by the network device;
a capability of a base station serving the terminal device; and
load information of a subscribed user slice instance of the first user.

In the foregoing process, the first user slice information determined in the foregoing manner is related to information such as a current location of the terminal device and a load of the user slice instance, so that the first user slice information is more suitable for the first user.

In a possible implementation, the first user slice information is marked default user slice information in the subscribed user slice information of the first user. In this way, the network device can quickly determine the first user slice information.

In a possible implementation, the second request message further includes first indication information, and the first indication information is for requesting the first user slice information of the first user.

In a possible implementation, the second request message further includes an identifier of a slice provider, and the first user slice information is user slice information provided by the slice provider. In this way, the first user slice information provided for the terminal device better meets a requirement of the first user.

In a possible implementation, the first user slice information is user slice information corresponding to a public land mobile network PLMN in which the terminal device is located.

In a possible implementation, the network device is an AMF network element or an SMF network element.

According to a second aspect, an embodiment of this application provides a communication method. A terminal device receives first user slice information of a first user that is sent by a network device, and determines the first user slice information as user slice information of the first user, where a user slice indicated by the first user slice information is a user slice used by the first user.

In the foregoing process, the network device may obtain the first user slice information of the first user, and send the first user slice information to the terminal device used by the first user, so that when the first user uses the terminal device, the terminal device may obtain a service from a network side by using the user slice indicated by the first user slice information. In this way, in a process in which different users use a same terminal device, the terminal device may obtain a service from a network side by using a user slice of the user (a user currently using the terminal device), to provide different services for the different users. Therefore, flexibility of performing communication by using a network slice is improved.

In a possible implementation, the first user slice information includes user slice information that is of a user slice and that is configured for the first user and/or user slice information that is of a user slice and that is allowed to be used by the first user.

Both the user slice information configured for the first user and the user slice information allowed to be used by the first user are user slice information that can be used by the first user. Therefore, the first user slice information sent to the terminal device may be user slice information that can be used by the first user.

In a possible implementation, the first user slice information is determined by the network device in subscribed user slice information of the first user based on at least one of the following information:
a registration area of the terminal device;
a user slice supported by the network device;
a capability of a base station serving the terminal device; and
load information of a subscribed user slice instance of the first user.

In the foregoing process, the first user slice information determined in the foregoing manner is related to information such as a current location of the terminal device and a load of the user slice instance, so that the first user slice information is more suitable for the first user.

In a possible implementation, before the terminal device receives the first user slice information of the first user that is sent by the network device, the terminal device sends a request message to the network device, where the request message includes a user identifier of the first user, and the request message is for requesting the first user slice information of the first user.

In a possible implementation, the request message further includes an identifier of the terminal device. In this way, when determining the first user slice information, the network device may remove slice information of the terminal device from the first user slice information, so that user slice information in the first user slice information does not include the slice information of the terminal device.

In a possible implementation, the request message further includes second user slice information, and the second user slice information includes one or more of the following information:
preset user slice information in the user slice information configured for the first user;
the user slice information configured for the first user, or a part of the user slice information configured for the first user; and
the user slice information allowed to be used by the first user, or a part of the user slice information allowed to be used by the first user.

In a possible implementation, the request message further includes first indication information, and the first indication information is for requesting the first user slice information of the first user.

In a possible implementation, the request message further includes an identifier of a slice provider, and the first user slice information is user slice information provided by the slice provider. In this way, the first user slice information provided for the terminal device better meets a requirement of the first user.

In a possible implementation, the first user slice information is user slice information corresponding to a public land mobile network PLMN in which the terminal device is located.

In a possible implementation, the network device is an AMF network element or an SMF network element.

According to a third aspect, an embodiment of this application provides a communication apparatus. The apparatus includes a processing module and a sending module.

The processing module is configured to determine first user slice information of a first user.

The sending module is configured to send the first user slice information to a terminal device, where the terminal device is a terminal device used by the first user, and a user slice indicated by the first user slice information is a user slice used by the first user.

In a possible implementation, the first user slice information includes user slice information configured for the first user and/or user slice information allowed to be used by the first user.

In a possible implementation, the apparatus further includes a receiving module.

The receiving module is configured to receive subscribed user slice information of the first user from a first device.

The processing module is specifically configured to determine the first user slice information based on the subscribed user slice information of the first user.

In a possible implementation, the sending module is further configured to send a first request message to the first device before the receiving module receives the subscribed user slice information of the first user from the first device, where the first request message is for requesting to obtain the subscribed user slice information of the first user, and the first request message includes a user identifier of the first user.

In a possible implementation, the first device is a unified data management UDM network element or an authentication, authorization, and accounting AAA server.

In a possible implementation, the receiving module is further configured to receive, before the processing module determines the first user slice information of the first user, a second request message sent by the terminal device, where the second request message includes the user identifier of the first user, and the second request message is for requesting to obtain the first user slice information of the first user.

In a possible implementation, the second request message further includes second user slice information, and the second user slice information includes one or more of the following information:
preset user slice information in the user slice information configured for the first user;
the user slice information configured for the first user, or a part of the user slice information configured for the first user; and
the user slice information allowed to be used by the first user, or a part of the user slice information allowed to be used by the first user.

In a possible implementation, the second request message further includes an identifier of the terminal device.

In a possible implementation, the first user slice information is determined by the network device based on the subscribed user slice information of the first user and at least one of the following information:
a registration area of the terminal device;
a user slice supported by the network device;
a capability of a base station serving the terminal device; and
load information of a subscribed user slice instance of the first user.

In a possible implementation, the first user slice information is marked default user slice information in the subscribed user slice information of the first user.

In a possible implementation, the second request message further includes first indication information, and the first indication information is for requesting the first user slice information of the first user.

In a possible implementation, the second request message further includes an identifier of a slice provider, and the first user slice information is user slice information provided by the slice provider.

In a possible implementation, the first user slice information is user slice information corresponding to a public land mobile network PLMN in which the terminal device is located.

In a possible implementation, the network device is an AMF network element or an SMF network element.

According to a fourth aspect, an embodiment of this application provides a communication apparatus. The apparatus includes a receiving module and a processing module.

The receiving module is configured to receive first user slice information of a first user that is sent by a network device, where a user slice indicated by the first user slice information is a user slice used by the first user.

The processing module is configured to determine the first user slice information as user slice information of the first user.

In a possible implementation, the first user slice information includes user slice information that is of a user slice and that is configured for the first user and/or user slice information that is of a user slice and that is allowed to be used by the first user.

In a possible implementation, the first user slice information is determined by the network device in subscribed user slice information of the first user based on at least one of the following information:
a registration area of the terminal device;
a user slice supported by the network device;
a capability of a base station serving the terminal device; and
load information of a subscribed user slice instance of the first user.

In a possible implementation, the apparatus further includes a sending module.

The sending module is configured to send a request message to the network device before the receiving module receives the first user slice information of the first user that is sent by the network device, where the request message includes a user identifier of the first user, and the request message is for requesting the first user slice information of the first user.

In a possible implementation, the request message further includes an identifier of the terminal device.

In a possible implementation, the request message further includes second user slice information, and the second user slice information includes one or more of the following information:
preset user slice information in the user slice information configured for the first user;
the user slice information configured for the first user, or a part of the user slice information configured for the first user; and
the user slice information allowed to be used by the first user, or a part of the user slice information allowed to be used by the first user.

In a possible implementation, the request message further includes first indication information, and the first indication information is for requesting the first user slice information of the first user.

In a possible implementation, the request message further includes an identifier of a slice provider, and the first user slice information is user slice information provided by the slice provider.

In a possible implementation, the first user slice information is user slice information corresponding to a public land mobile network PLMN in which the terminal device is located.

The network device is an AMF network element or an SMF network element.

According to a fifth aspect, an embodiment of this application provides a communication apparatus, including a memory and a processor. The processor executes program instructions in the memory, to implement the communication method according to any implementation of the first aspect.

According to a sixth aspect, an embodiment of this application provides a communication apparatus, including a memory and a processor. The processor executes program instructions in the memory, to implement the communication method according to any implementation of the second aspect.

According to a seventh aspect, an embodiment of this application provides a readable storage medium. The storage medium is configured to store a computer program, and the computer program is used to implement the communication method according to any implementation of the first aspect.

According to an eighth aspect, an embodiment of this application provides a readable storage medium. The storage medium is configured to store a computer program, and the computer program is used to implement the communication method according to any implementation of the second aspect.

Based on the communication method and apparatus, and the device provided in embodiments of this application, the network device may obtain the first user slice information of the first user, and send the first user slice information to the terminal device used by the first user, so that when the first user uses the terminal device, the terminal device may obtain a service from a network side by using the user slice indicated by the first user slice information. In this way, in a process in which different users use a same terminal device, the terminal device may obtain a service from a network side by using a user slice of the user (a user currently using the terminal device), to provide different services for the different users. Therefore, flexibility of performing communication by using a network slice is improved.

### BRIEF DESCRIPTION OF DRAWINGS

FIG. 1 is a diagram of an architecture of a 5G communication system according to an embodiment of this application;
FIG. 2 is a schematic diagram of a network slice application scenario according to an embodiment of this application;
FIG. 3 is a schematic diagram of another network slice application scenario according to an embodiment of this application;
FIG. 4 is a schematic diagram of an application scenario according to an embodiment of this application;
FIG. 5 is a schematic flowchart of a communication method according to an embodiment of this application;
FIG. 6 is a schematic flowchart of another communication method according to an embodiment of this application;
FIG. 7 is a schematic flowchart of still another communication method according to an embodiment of this application;
FIG. 8 is a schematic flowchart of yet another communication method according to an embodiment of this application;
FIG. 9 is a schematic flowchart of still another communication method according to an embodiment of this application;
FIG. 10 is a schematic flowchart of yet another communication method according to an embodiment of this application;
FIG. 11 is a schematic flowchart of still another communication method according to an embodiment of this application;
FIG. 12 is a schematic diagram of a structure of a communication apparatus according to an embodiment of this application;
FIG. 13 is a schematic diagram of a structure of another communication apparatus according to an embodiment of this application;
FIG. 14 is a schematic diagram of a structure of still another communication apparatus according to an embodiment of this application;
FIG. 15 is a schematic diagram of a structure of yet another communication apparatus according to an embodiment of this application;
FIG. 16 is a schematic diagram of a hardware structure of a communication apparatus according to this application; and
FIG. 17 is a schematic diagram of a hardware structure of another communication apparatus according to this application.

### DETAILED DESCRIPTION OF EMBODIMENTS

Technical solutions in this application may be applied to a fifth generation mobile communication technology (5th generation mobile communication technology, 5G) system, may be applied to a long term evolution (long term evolution, LTE) system, or may be applied to a universal mobile telecommunications system (universal mobile telecommunications system, UMTS) terrestrial radio access network (UMTS terrestrial radio access network, UTRAN) system, or a global system for mobile communications (global system for mobile communications, GSM)/enhanced data rates for GSM evolution (enhanced data rates for GSM evolution, EDGE) radio access network (GSM/EDGE radio access network, GERAN) architecture.

The technical solutions in this application may alternatively be applied to another communication system, for example, an evolved communication system of the 5G system. This is not limited in this application. The following uses an example in which a communication system used in this application is a 5G communication system to describe in detail the technical solutions in this application.

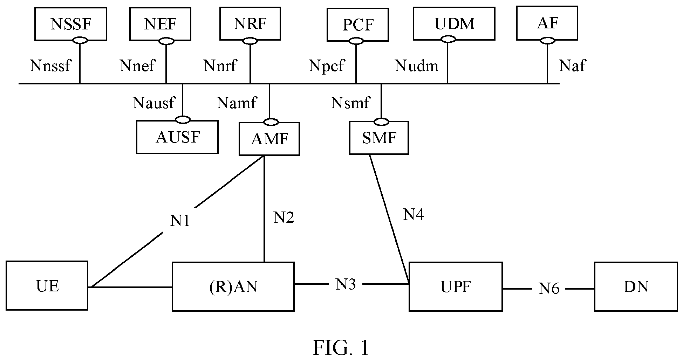

FIG. 1 is a diagram of an architecture of a 5G communication system according to an embodiment of this application. With reference to FIG. 1, the 5G communication system includes user equipment (user equipment, UE), an access network (access network, AN) node, a user port function (user port function, UPF) network element, a data network (data network, DN), an access and mobility management function (access and mobility management function, AMF) network element, a session management function (session management function, SMF) network element, a policy control function (policy control function, PCF) network element, an application function (application function, AF) network element, a network slice selection function (network slice selection function, NSSF) network element, an authentication server function (authentication server function, AUSF) network element, a unified data management (unified data management, UDM) network element, a network exposure function (network exposure function, NEF) network element, and a network repository function (network repository function, NRF) network element.

The UE may be a mobile phone (or referred to as a "cellular" phone) or a computer having a mobile terminal. For example, the UE may be a portable, pocket-sized, handheld, computer built-in, or in-vehicle mobile apparatus. In addition, the UE may also be referred to as a mobile station (mobile station, MS), a terminal (terminal), or a terminal device (terminal equipment). This is not limited in this application. The AN node may be a device that provides wireless access for the UE, including but not limited to an evolved NodeB (evolved NodeB, eNB for short), a wireless-fidelity access point (wireless-fidelity access point, Wi-Fi AP for short), a worldwide interoperability for microwave access base station (worldwide interoperability for microwave access base station, WiMAX BS for short), a base station (for example, a gNodeB or a gNB) in a 5G network, and the like. Alternatively, the AN node may be a radio access network (radio access network, RAN) node. The UPF network element may process a packet. For example, the UPF network element may perform functions such as user data forwarding, routing, statistics collection, rate limiting, and statistics reporting. The DN is for providing a data service for the UE, and may be an access destination of a protocol data unit (protocol data unit, PDU) session of a user. The AMF network element may perform mobility management in a mobile network, for example, user location update, user network registration, and user handover. The AMF network element may obtain non-access stratum (non-access stratum, NAS) signaling (including session management (session management, SM) signaling) of the UE through an N1 interface and obtain signaling of a RAN through an N2 interface, to complete a user registration procedure, SM signaling forwarding, and mobility management. The AMF network element may forward a message between the SMF network element and the UE. The SMF network element may perform session management in the mobile network, for example, session establishment, session modification, and session release. The PCF network element may manage a user policy, including a mobility-related policy, and a PDU session-related policy, for example, a quality of service (quality of service, QoS) policy or a charging policy. The AF network element may send a request to affect an SMF routing policy, and is responsible for selecting and relocating an application program in the local DN. The NSSF network element is for selecting a network slice. The AUSF network element provides an authentication service function, to perform authentication/authorization on the terminal device. The UDM network element may store information such as user subscription data.

A person skilled in the art may understand that characters on a connection line between network elements in FIG. 1 identify a communication interface between the network elements.

For ease of understanding, concepts in this application are first described.

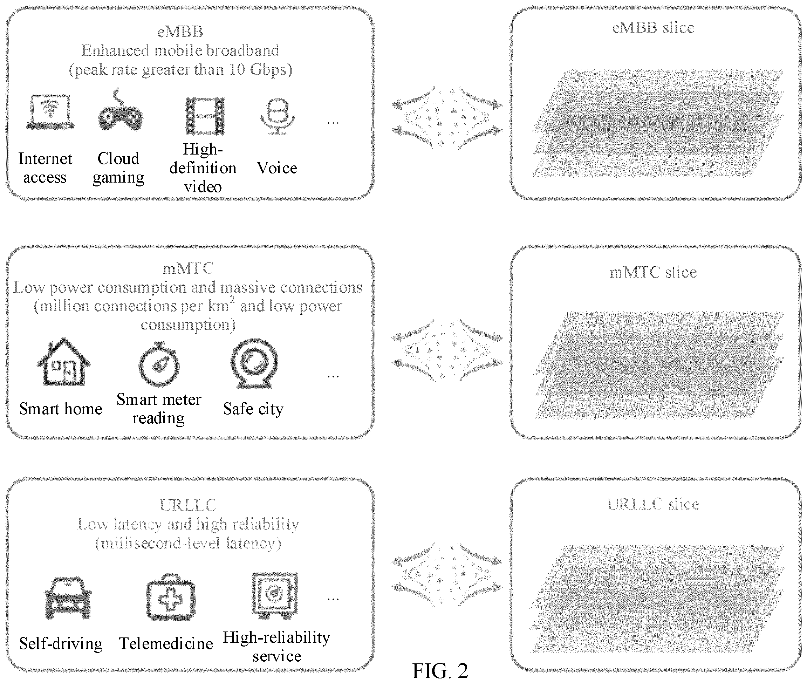

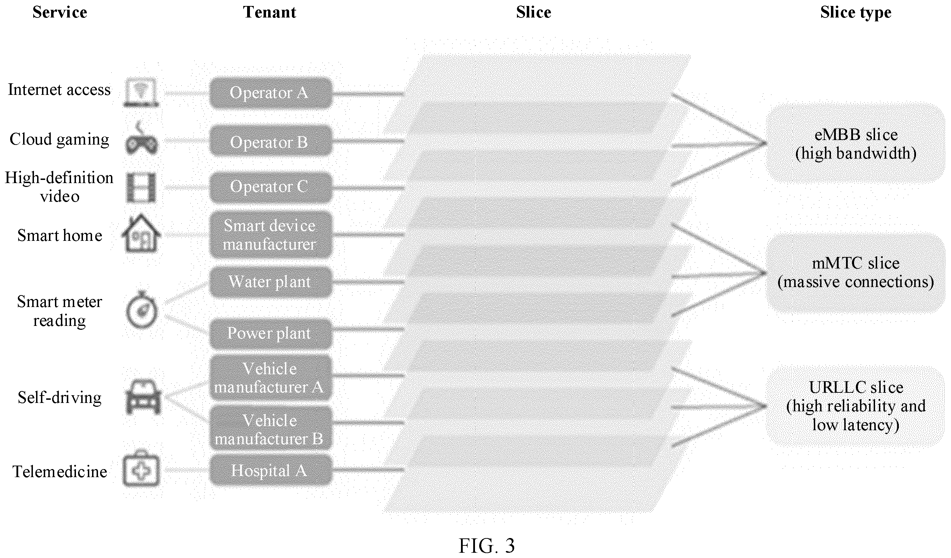

Network slicing (Network slicing): Generally, the network slicing is to virtualize a plurality of end-to-end networks based on universal hardware by using a slicing technology. Different network slices may have different network functions, to adapt to different types of network service requirements. For example, after purchasing a physical resource, an operator may virtualize an enhanced mobile broadband (enhanced mobile broadband, eMBB) network slice by using the physical resource, and may further virtualize a massive machine type communications (massive machine type communications, mMTC) network slice by using the physical resource based on a service requirement in a vertical industry. The two network slices may separately provide services for different service scenarios. Optionally, network slices may include an eMBB network slice, an mMTC network slice, and an ultra-reliable and low-latency communication (ultra-reliable and low-latency communication, URLLC) network slice. The following describes application scenarios of the three types of network slices with reference to FIG. 2 and FIG. 3.

FIG. 2 is a schematic diagram of a network slice application scenario according to an embodiment of this application. With reference to FIG. 2, different services may be carried by using different network slices. For example, a peak rate provided by the eMBB network slice is usually greater than 10 Gbps, and the eMBB network slice may be used to provide services such as Internet access, cloud gaming, high-definition video, and voice services. The mMTC network slice has low power consumption, may implement massive connections, and may be used to provide a smart home service, a smart meter reading service, a safe city service, and the like. The URLLC network slice has a low latency (where the latency may be at a millisecond-level) and high reliability, and may be used to provide a self-driving service, a telemedicine service, and the like. A service provider may provide a service for a user by leasing or purchasing a network slice. For example, a vehicle manufacturer may provide a self-driving service. Vehicle manufacturers A and B may separately subscribe to URLLC network slices provided by an operator and use different network slice instances to provide communication services for their end customers, achieving real-time and reliable connections between vehicles and remote platforms.

FIG. 3 is a schematic diagram of another network slice application scenario according to an embodiment of this application. With reference to FIG. 3, a network slice is a complete end-to-end logical network. The network slice may include a wireless network sub-slice, a transport network sub-slice, and a core network sub-slice. A wireless network, a transport network, and a core network are logically isolated from each other. The network slice is usually characterized by "on-demand customization", "an end-to-end framework ", and "isolation", and may implement end-to-end dynamic on-demand (based on a location and a specification) deployment of a network service. In addition, the network slice has an independent life cycle, so that different network slices do not affect each other.

Network slices may include a network slice of a terminal device and a network slice of a user. The following separately describes the network slice of the terminal device and the network slice of the user.

The network slice of the terminal device may also be referred to as a network slice of UE or a slice of UE. The network slice of the terminal device is a network slice that can be used by the terminal device. In an actual application process, a plurality of users may use the terminal device, and the plurality of users each may use the network slice in a process of using the terminal device.

The network slice of the user may also be referred to as a user slice. The network slice of the user is a network slice that can be used by the user. In an actual application process, a plurality of users may use a same terminal device, and when different users use a same terminal device, the different users may use different user slices. For example, a user 1 and a user 2 may use a same terminal device, a network slice of the user 1 includes a user slice 1, and a network slice of the user 2 includes a user slice 2. In this case, when the user 1 uses the terminal device, the terminal device may use the user slice 1 to transmit data; when the user 2 uses the terminal device, the terminal device may use the user slice 2 to transmit data. Optionally, the user has a corresponding user identity (user identity), and the user identity may be used to uniquely identify the user. The user may be a person, or may be an application, a device, or the like. A user may have one or more user identities. For example, a user identity of a user is a work role, and another user identity of the user is a private life role. The terminal device may distinguish between the network slice of the terminal device and the network slice of the user.

Network slice information: The network slice information may be used to identify a network slice (a network slice of a terminal device or a network slice of a user), and the network slice information may also be referred to as an identifier of the network slice. For example, the network slice information may be single network slice selection assistance information (single network slice selection assistance information, S-NSSAI) or network slice selection assistance information (network slice selection assistance information, NSSAI). The NSSAI is a set of S-NSSAI. In the following, for ease of description, S-NSSAI or NSSAI may be used to represent a network slice.

For example, concepts of network slices used in a 5G network may include a requested network slice (Requested NSSAI), an allowed network slice (Allowed NSSAI), a configured network slice (Configured NSSAI), a subscribed network slice (Subscribed S-NSSAI), and a rejected network slice (Rejected NSSAI). For example, descriptions of the network slices may be shown in Table 1.

**Table 1**

| Network slice | Description |
|---|---|
| Requested network slice (requested NSSAI) | The requested NSSAI is NSSAI that a terminal device expects to use, is provided by UE for a network side in a registration procedure, and includes a maximum of eight pieces of S-NSSAI. |
| Allowed network slice (allowed NSSAI) | The allowed NSSAI is provided by a serving PLMN for the UE in, for example, the registration procedure, indicates S-NSSAI values that can be used by the UE in the serving PLMN for a current registration area, and includes a maximum of eight pieces of S-NSSAI. The UE locally stores the allowed network slice. |
| Configured network slice (configured NSSAI) | The configured NSSAI is NSSAI that is applicable to one or more PLMNs, is delivered by an AMF to the UE by using, for example, a registration accept message or a configuration update command message, and includes a maximum of 16 pieces of S-NSSAI. The UE locally stores the configured network slice. |
| Subscribed network slice (subscribed S-NSSAI) | The subscribed S-NSSAI is a slice based on subscription information of the UE, and a quantity of pieces of subscribed S-NSSAI is not limited. |
| Rejected network slice (rejected NSSAI) | The rejected NSSAI is a slice that the serving PLMN disallows the UE to use, is delivered by the AMF network element to the UE by using, for example, the registration accept message or the configuration update command message, and includes a maximum of eight pieces of S-NSSAI. The UE locally stores the rejected network slice. |

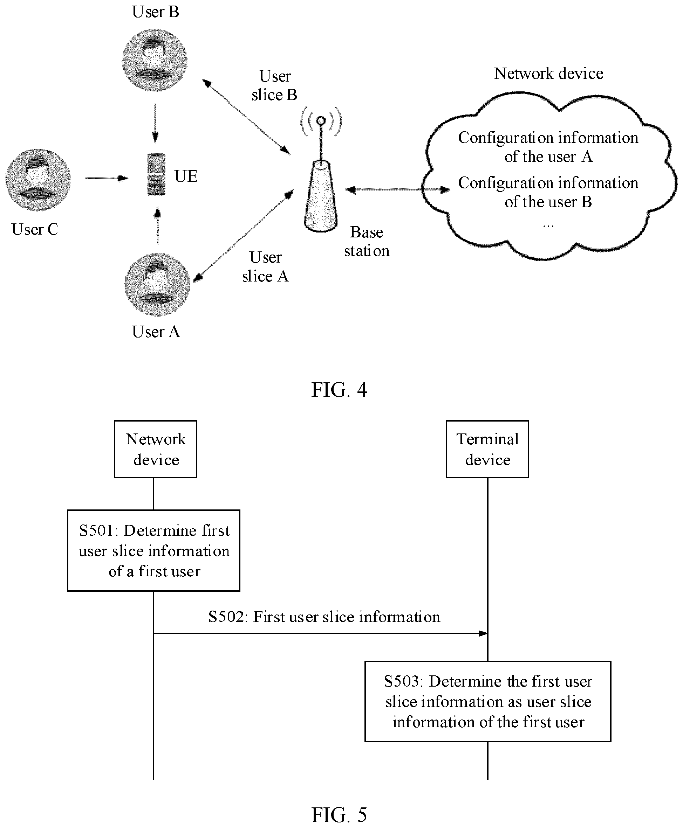

The following describes, with reference to FIG. 4, an application scenario to which this application is applicable.

FIG. 4 is a schematic diagram of an application scenario according to an embodiment of this application. With reference to FIG. 4, a user A, a user B, a user C, UE, a base station, and a network device are included. The network device stores configuration information of the user, and the configuration information of the user includes a user slice of the user. The user A, the user B, and the user C may use the same UE. It is assumed that a network slice of the user A is a user slice A, and a network slice of the user B is a user slice B. When the user A uses the UE, if the UE has learned of the user slice A of the user A, the UE may perform data transmission with the base station by using the user slice A. When the user B uses the UE, if the UE has learned of the user slice B of the user B, the UE may perform data transmission with the base station by using the user slice B When the user C uses the UE, if the UE has not learned of a user slice of the user C, the network device may send the user slice of the user C to the UE, so that the UE performs data transmission with the base station based on the user slice of the user C.

In this application, a network device may obtain user slice information of a user, and send the user slice information of the user to a terminal device, so that when the user uses the terminal device, the terminal device may obtain a service from a network side by using a user slice indicated by the user slice information. In this way, in a process in which different users use a same terminal device, the terminal device may obtain a service from a network side by using a user slice of a current user (a user currently using the terminal device), to provide different services for the different users. Therefore, flexibility of performing communication by using a network slice is improved.

The following describes in detail the technical solutions in this application by using specific embodiments. It should be noted that the following several embodiments may be independent or may be combined with each other, and same or similar content is not described repeatedly in different embodiments.

FIG. 5 is a schematic flowchart of a communication method according to an embodiment of this application. With reference to FIG. 5, the method may include the following steps.

S501: A network device determines first user slice information of a first user.

Optionally, the network device may be an AMF network element or an SMF network element. Certainly, the network device may alternatively be another network element. This is not specifically limited in this embodiment of this application.

The first user may be any user that uses a terminal device.

The first user slice information may be user slice information of a user slice used by the first user. In other words, a user slice indicated by the first user slice information is a slice used by the first user.

The first user slice information includes user slice information configured for the first user (a configured network slice) and/or user slice information allowed to be used by the first user (an allowed network slice). It should be noted that, for the user slice information configured for the first user and the user slice information allowed to be used by the first user, refer to the foregoing descriptions in Table 1. A difference lies in that the user slice information configured for the first user and the user slice information allowed to be used by the first user are specific to the first user, but the allowed network slice and the configured network slice described in Table 1 are not specific to a user.

S502: The network device sends the first user slice information to the terminal device.

The terminal device is a terminal device used by the first user.

In an actual application process, before S501, the network device interacts with the terminal device used by the first user, and the network device may store a correspondence between the first user and the terminal device. Correspondingly, after determining the first user slice information, the network device may first determine the terminal device based on the first user, and then send the first user slice information to the terminal device.

S503: The terminal device determines the first user slice information as user slice information of the first user.

After receiving the first user slice information, the terminal device determines the first user slice information as the user slice information of the first user. In this way, in a process in which the first user uses the terminal device, the terminal device obtains a service from a network side by using the user slice indicated by the first user slice information.

According to the communication method provided in this embodiment of this application, the network device may obtain the first user slice information of the first user, and send the first user slice information to the terminal device used by the first user, so that when the first user uses the terminal device, the terminal device may obtain the service from the network side by using the user slice indicated by the first user slice information. In this way, in a process in which different users use a same terminal device, the terminal device may obtain a service from a network side by using a user slice of a current user (a user currently using the terminal device), to provide different services for the different users. Therefore, flexibility of performing communication by using a network slice is improved.

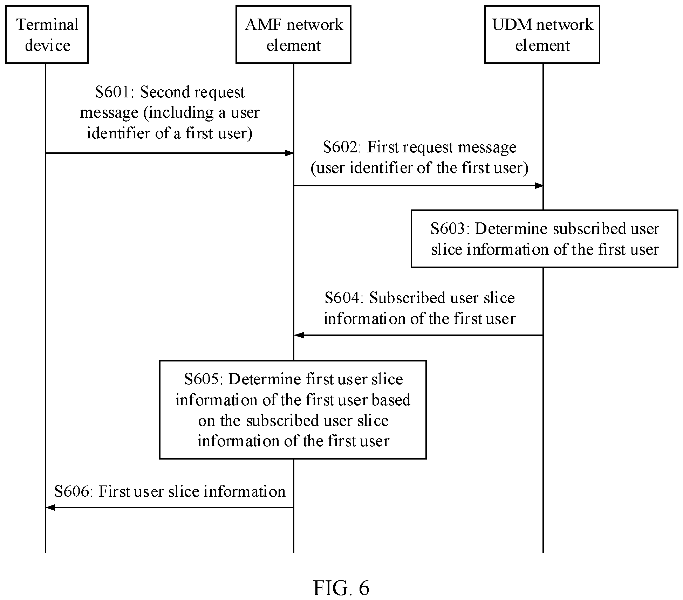

The following describes in detail the communication method with reference to embodiments shown in FIG. 6 to FIG. 11.

FIG. 6 is a schematic flowchart of another communication method according to an embodiment of this application. In the embodiment shown in FIG. 6, that a network device is an AMF network element is used as an example for description. With reference to FIG. 6, the method includes the following steps.

S601: A terminal device sends a second request message to the AMF network element.

The second request message includes a user identifier of a first user.

The second request message is for requesting to obtain first user slice information of the first user.

Optionally, the second request message has a function of requesting to obtain the first user slice information.

Optionally, the second request message further includes first indication information, and the first indication information is for requesting the first user slice information of the first user. For example, the first indication information may be a value of a preset field in the second request message, and the value of the preset field is for requesting to obtain the first user slice information.

The user identifier of the first user may be an email address, a registered account (a game account, a social media account, or the like), or the like of the first user. The user identifier is not specifically limited in this embodiment of this application.

Optionally, the terminal device may send the second request message to the AMF network element under the following conditions.

Condition 1: When the first user uses the terminal device for the first time, and the terminal device cannot determine user slice information of the first user, the terminal device requests to obtain the first user slice information of the first user from the AMF network element. For example, when the first user logs in to a game on the terminal device for the first time by using a game account (the user identifier of the first user), if the terminal device determines that user slice information corresponding to the game account is not stored this time, the terminal device sends the second request message to the AMF network element.

Condition 2: When the first user has used the terminal device, and the first user expects to obtain new first user slice information, the user may enter a preset instruction on the terminal device, so that the terminal device requests to obtain the first user slice information of the first user from the AMF network element. For example, after the first user logs in to a game on the terminal device by using a game account, a game interface includes an update icon, and the user may click the update icon, so that the terminal device sends the second request message to the AMF network element.

It should be noted that the condition 1 and the condition 2 are merely examples of trigger conditions for sending the second request message by the terminal device to the AMF network element. Certainly, the terminal device may alternatively send the second request message to the AMF network element under another trigger condition. This is not specifically limited in this embodiment of this application.

Optionally, the second request message further includes an identifier of the terminal device. In this way, after receiving the second request message, the AMF network element may remove slice information of the terminal device when determining the first user slice information. In other words, the first user slice information fed back by the AMF network element to the terminal device does not include the slice information of the terminal device.

Optionally, the second request message further includes an identifier of a slice provider. The slice provider may be an application, a third party, an operator, or the like. In this way, after receiving the second request message, the AMF network element may determine the first user slice information based on the identifier of the slice provider when determining the first user slice information, so that a user slice indicated by the determined first user slice information is a user slice provided by the slice provider.

Optionally, the second request message further includes second user slice information, and the second user slice information includes one or more of the following four pieces of information: information 1: preset user slice information in user slice information configured for the first user; information 2: the user slice information configured for the first user, or a part of the user slice information configured for the first user; information 3: user slice information allowed to be used by the first user, or a part of the user slice information allowed to be used by the first user; and information 4: network slice information of the terminal device, including a configured slice, an allowed slice, or the like.

In the information 1, the preset user slice information in the user slice information configured for the first user may also be referred to as default configured slice information. The default configured slice information may be configured by the terminal device, or may be configured by the network device.

For example, if the user slice information configured for the first user or the user slice information allowed to be used by the first user does not exist in the terminal device, but the preset user slice information exists in the terminal device, the second request message may include the information 1.

For example, if the user slice information configured for the first user exists in the terminal device, the second request message may include the information 2.

For example, if the user slice information allowed to be used by the first user exists in the terminal device, the second request message may include the information 3.

For example, if the user slice information configured for the first user or the user slice information allowed to be used by the first user does not exist in the terminal device, and the preset user slice information does not exist in the terminal device, the second request message may include the information 4.

For example, if the user slice information configured for the first user exists in the terminal device, and the user slice information allowed to be used by the first user exists in the terminal device, the second request message may include the information 2 and the information 3.

It should be noted that the second request message includes the user identifier of the first user, and the second request message may further include one or more of the following information: the identifier of the terminal device, the identifier of the slice provider, or the second user slice information.

Optionally, the second request message may be a user slice update message, a terminal configuration update message, or a session management message. For example, the session management message may be a session establishment request message or a session modification request message. This is not specifically limited in this embodiment of this application.

S602: The AMF network element sends a first request message to a UDM network element.

The first request message includes the user identifier of the first user.

The first request message is for requesting to obtain subscribed user slice information of the first user.

Optionally, the first request message has a function of requesting to obtain the subscribed user slice information of the first user.

Optionally, the first request message includes indication information for requesting to obtain the subscribed user slice information of the first user. For example, the indication information may be a value of a preset field in the first request message, and the value of the preset field is for requesting to obtain the subscribed user slice information of the first user.

It should be noted that the UDM network element is a network element configured to manage user slice information. Optionally, the UDM network element may alternatively be another network element, for example, another existing network element or a newly added network element.

Optionally, the first request message may be used to request to obtain subscription information of the first user, and the subscription information includes the subscribed user slice information of the first user. Alternatively, the first request message may be used to request to obtain configuration information (user profile) of the first user, and the configuration information of the first user includes the subscribed user slice information of the first user.

For example, the first request message may be a user slice query request message.

Optionally, the first request message may further include the identifier of the terminal device. For example, when the second request message includes the identifier of the terminal device, the first request message also includes the identifier of the terminal device.

S603: The UDM network element determines the subscribed user slice information of the first user.

Different subscribed user slice information of the first user may be determined based on different content included in the first request message. The following two cases may be included.

First case: The first request message does not include the identifier of the terminal device.

In this case, the UDM network element may query for the subscribed user slice information of the first user based on the user identifier of the first user.

Second case: The first request message includes the identifier of the terminal device.

In this case, the UDM network element may determine the subscribed user slice information of the first user in the following two manners.

Manner 1: The UDM network element queries for the subscribed user slice information of the first user based on the user identifier of the first user. The UDM network element further queries for the network slice information of the terminal device based on the identifier of the terminal device.

Manner 2: The UDM network element queries for the subscribed user slice information of the first user based on the user identifier of the first user, queries for the network slice information of the terminal device based on the identifier of the terminal device, and deletes the network slice information of the terminal device from the subscribed user slice information of the first user.

For example, it is assumed that the first request message includes the user identifier of the first user and the identifier of the terminal device, the user slice information obtained by the UDM network element through query based on the user identifier of the first user includes S-NSSAI 1, S-NSSAI 2, S-NSSAI 3, and S-NSSAI 4, and the network slice information obtained by the UDM network element through query based on the identifier of the terminal device includes S-NSSAI 2 and S-NSSAI 3. In this case, the subscribed user slice information that is of the first user and that is determined by the UDM network element may include S-NSSAI 1 and S-NSSAI 4.

S604: The UDM network element sends the subscribed user slice information of the first user to the AMF network element.

Optionally, the UDM network element may send a message including the subscribed user slice information of the first user to the AMF network element. For example, the message may be a response message of the first request message.

Optionally, in the manner 1 of the second case in S603, the UDM network element further sends the network slice information of the terminal device to the AMF network element.

It should be noted that S602 to S604 may alternatively be optional steps, that is, S605 is performed after S601.

S605: The AMF network element determines the first user slice information of the first user based on the subscribed user slice information of the first user.

Optionally, the first user slice information may be marked default user slice information in the subscribed user slice information of the first user.

Optionally, the AMF network element may determine the first user slice information based on the subscribed user slice information of the first user and at least one of the following information: a registration area of the terminal device; a user slice supported by the AMF network element; a capability of a base station serving the terminal device; and load information of a subscribed user slice instance of the first user. The load information is for indicating a load level (for example, a load status) of the user slice instance, and the load information may also be referred to as load level information.

For example, the user slice indicated by the first user slice information is a user slice supported by the AMF network element and the base station serving the terminal device.

For example, in the registration area of the terminal device, some pieces of subscribed user slice information of the first user are not supported, and the allowed first user slice information does not include the unsupported first user slice information.

For example, if a load level of a user slice instance corresponding to a specific piece of subscribed user slice information of the first user in a current network is excessively high, the AMF network element does not allow the first user to use the first user slice information. The load information of the user slice instance may be obtained by the AMF network element from a network data analytics function (network data analytics function, NWDAF) network element.

Optionally, the first user slice information includes one or more of the following information.

### First type of information: User slice information allowed to be used by the first user

Different user slice information allowed to be used by the first user may be determined based on different content included in the second request message. The following two cases may be included.

First case: The second request message includes the second user slice information, and the second user slice information includes user-level slice information (which is not the network slice information of the terminal device but is the information 1, the information 2, or the information 3 in S601). In addition, the user-level slice information includes user slice information that is the same as the subscribed user slice information of the first user.

In this case, it is determined that the user slice information allowed to be used by the first user includes the user slice information that is the same as the subscribed user slice information of the first user and that is in the user-level slice information.

For example, it is assumed that the user-level slice information in the second user slice information includes S-NSSAI 1, S-NSSAI 2, S-NSSAI 3, S-NSSAI 4, and S-NSSAI 5, and the subscribed user slice information of the first user also includes S-NSSAI 2, S-NSSAI 3, and S-NSSAI 4. In this case, it is determined that the user slice information allowed to be used by the first user includes S-NSSAI 2, S-NSSAI 3, and S-NSSAI 4.

In this case, in consideration of other factors such as the registration area of the terminal device, the user slice supported by the AMF network element, the capability of the base station serving the terminal device, and the load information of the subscribed user slice instance of the first user, even if the provided user-level slice information and the subscribed user slice information of the first user include same user slice information, the same user slice information may not be included in the determined user slice information allowed to be used by the first user.

Second case: In the following cases, it is determined that the user slice information allowed to be used by the first user includes preset slice information (or referred to as default slice information) in the subscribed user slice information of the first user.

Case 1: The second request message does not include the second user slice information.

Case 2: The second request message includes the second user slice information, and the second user slice information does not include the user-level slice information.

Case 3: The second request message includes the second user slice information, the second user slice information includes the user-level slice information, and the user-level slice information does not include the user slice information that is the same as the subscribed user slice information of the first user.

### Second type of information: User slice information configured for the first user

Optionally, if subscribed user slice information of the first user is updated, and original user slice information configured for the first user is affected, or in the second case (including the case 1, the case 2, and the case 3), latest configured user slice information is provided.

Optionally, the first user slice information may further include rejected user slice information, and the rejected user slice information includes slice information that is in the second user slice information and that is rejected by the network device for use. For example, it is assumed that the second user slice information includes S-NSSAI 1 and S-NSSAI 2, but the network device disallows the first user to use S-NSSAI 1 and S-NSSAI 2. In this case, the first user slice information may include S-NSSAI 1 and S-NSSAI 2.

Optionally, for a same user slice, user slice information of the user slice may be different in different PLMNs. The first user slice information is user slice information corresponding to a PLMN in which the terminal device is located.

If the AMF network element determines that user slice information (the second user slice information obtained before the first user slice information, the subscribed user slice information of the first user, or the determined first user slice information, which is referred to as the user slice information for short below) is user slice information in the PLMN in which the terminal device is located, the AMF network element does not need to convert the user slice information.

If the AMF network element determines that the first user slice information is not user slice information in the PLMN in which the terminal device is located, the AMF network element may convert the first user slice information, to convert the first user slice information into user slice information in the PLMN in which the terminal device is currently located. If the user slice information is converted, the first user slice information provided by the AMF network element for the terminal device may include both the user slice information that is not converted and converted user slice information.

It should be noted that if S602 to S604 are not performed, in S605, the AMF network element may first obtain the subscribed user slice information of the first user, and then determine the first user slice information of the first user based on the subscribed user slice information of the first user. For example, the AMF network element prestores the subscribed user slice information of the first user. In this case, the AMF network element may locally obtain the subscribed user slice information of the first user.

S606: The AMF network element sends the first user slice information to the terminal device.

Optionally, the AMF network element may send a message including the first user slice information to the terminal device. The message may be a response message of the second request message.

After receiving the first user slice information, the terminal device may delete previously stored user slice information of the first user, and store the first user slice information.

In the embodiment shown in FIG. 6, after the terminal device used by the first user sends the second request message to the AMF network element, the AMF network element may query the UDM network element to obtain the first user slice information of the first user, and send the first user slice information to the terminal device used by the first user, so that when the first user uses the terminal device, the terminal device may obtain a service from a network side by using the user slice indicated by the first user slice information. In this way, in a process in which different users use a same terminal device, the terminal device may obtain a service from a network side by using a user slice of a current user (a user currently using the terminal device), to provide different services for the different users. Therefore, flexibility of performing communication by using a network slice is improved.

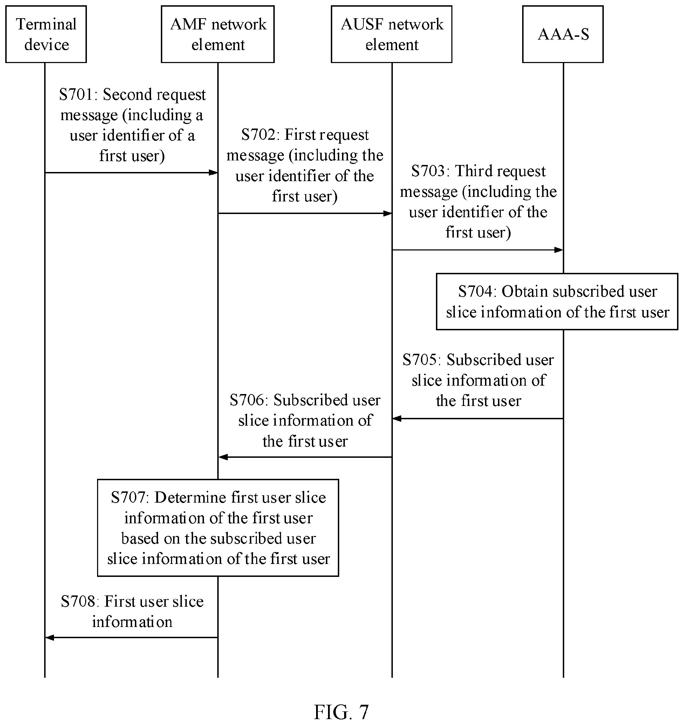

FIG. 7 is a schematic flowchart of still another communication method according to an embodiment of this application. In the embodiment shown in FIG. 7, that a network device is an AMF network element is used as an example for description. With reference to FIG. 7, the method includes the following steps.

S701: A terminal device sends a second request message to the AMF network element.

It should be noted that, for a process of performing S701, refer to the process of performing S601. Details are not described herein again.

S702: The AMF network element sends a first request message to an AUSF network element.

The first request message includes a user identifier of a first user.

The first request message is for requesting to obtain subscribed user slice information of the first user.

Optionally, the first request message has a function of requesting to obtain the subscribed user slice information of the first user.

Optionally, the first request message includes indication information for requesting to obtain the subscribed user slice information of the first user. For example, the indication information may be a value of a preset field in the first request message, and the value of the preset field is for requesting to obtain the subscribed user slice information of the first user.

It should be noted that the AUSF network element may alternatively be another network element, for example, another existing network element or a newly added network element.

Optionally, the first request message may be a user slice authentication request message.

Optionally, the first request message may include an address of an authentication, authorization, and accounting server (authentication, authorization, and accounting server, AAA-S).

Optionally, the first request message may further include an identifier of the terminal device. For example, when the second request message includes the identifier of the terminal device, the first request message also includes the identifier of the terminal device.

S703: The AUSF network element sends a third request message to the AAA-S.

The third request message includes the user identifier of the first user.

The third request message is for requesting to obtain the subscribed user slice information of the first user.

Optionally, the third request message may be a user slice authentication request message, or may be a user slice authorization request message.

Optionally, the AUSF network element may send the third request message to the AAA-S by using an authentication, authorization, and accounting proxy (authentication, authorization, and accounting proxy, AAA-P). For example, the AUSF network element may send the third request message to an AAA-P server, and then the AAA-P server sends the third request message to the AAA-S.

S704: The AAA-S obtains the subscribed user slice information of the first user.

It should be noted that, for a process of performing S704, refer to the process of performing S603. Details are not described herein again. A difference between S704 and S603 lies in that S704 and S603 are performed by different bodies.

S705: The AAA-S sends the subscribed user slice information of the first user to the AUSF network element.

Optionally, the AAA-S may send a message including the subscribed user slice information of the first user to the AUSF network element. The message may be a response message of the third request message.

Optionally, the AAA-S may send the subscribed user slice information of the first user to the AUSF network element through the AAA-P server. For example, the AAA-S may send the subscribed user slice information of the first user to the AAA-P server, and then the AAA-P server sends the subscribed user slice information of the first user to the AUSF network element.

S706: The AUSF network element sends the subscribed user slice information of the first user to the AMF network element.

Optionally, the AUSF network element may send a message including the subscribed user slice information of the first user to the AMF network element. For example, the message may be a response message of the first request message.

Optionally, when the first request message includes the identifier of the terminal device, the AUSF network element may further send network slice information of the terminal device to the AMF network element.

It should be noted that S702 to S706 may alternatively be optional steps, that is, S707 is performed after S701.

S707: The AMF network element determines first user slice information of the first user based on the subscribed user slice information of the first user.

It should be noted that if S702 to S706 are not performed, in S707, the AMF network element may first obtain the subscribed user slice information of the first user, and then determine the first user slice information of the first user based on the subscribed user slice information of the first user. For example, the AMF network element prestores the subscribed user slice information of the first user. In this case, the AMF network element may locally obtain the subscribed user slice information of the first user.

S708: The AMF network element sends the first user slice information to the terminal device.

It should be noted that, for a process of performing S707 and S708, refer to the process of performing S605 and S606. Details are not described herein again.

After receiving the first user slice information, the terminal device may delete previously stored user slice information of the first user, and store the first user slice information.

In the embodiment shown in FIG. 7, after the terminal device used by the first user sends the second request message to the AMF network element, the AMF network element may obtain the first user slice information of the first user from the AUSF network element, and send the first user slice information to the terminal device used by the first user, so that when the first user uses the terminal device, the terminal device may obtain a service from a network side by using a user slice indicated by the first user slice information. In this way, in a process in which different users use a same terminal device, the terminal device may obtain a service from a network side by using a user slice of a current user (a user currently using the terminal device), to provide different services for the different users. Therefore, flexibility of performing communication by using a network slice is improved.

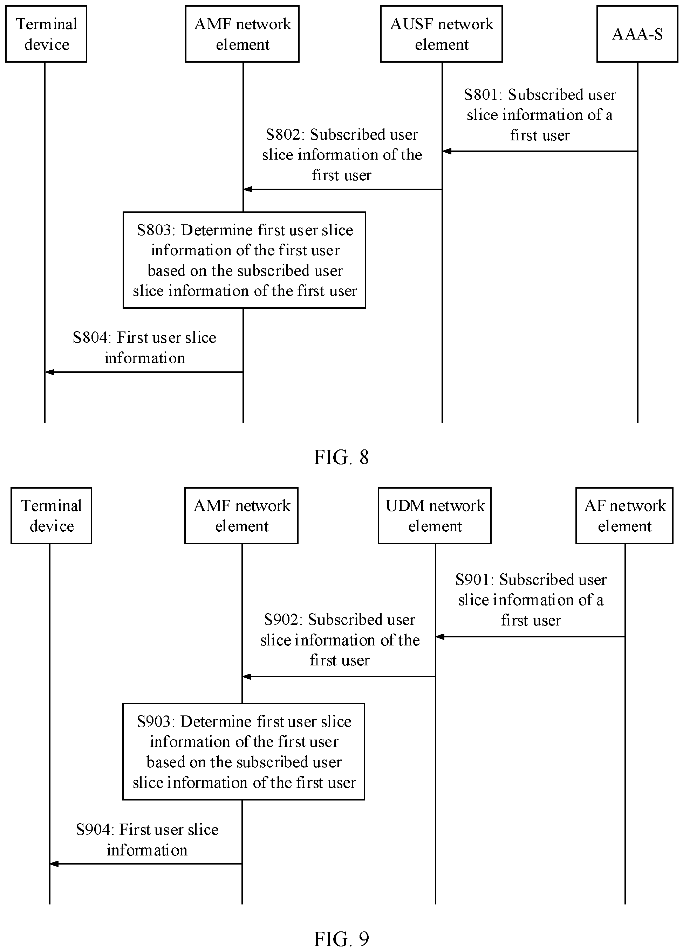

FIG. 8 is a schematic flowchart of yet another communication method according to an embodiment of this application. In the embodiment shown in FIG. 8, that a network device is an AMF network element is used as an example for description. With reference to FIG. 8, the method includes the following steps.

S801: An AAA-S sends subscribed user slice information of a first user to an AUSF network element.

The AAA-S first obtains the subscribed user slice information of the first user, and then sends the subscribed user slice information of the first user to the AUSF network element. For example, after determining that subscribed user slice information of the first user is updated, the AAA-S first obtains the (updated) subscribed user slice information of the first user, and sends the subscribed user slice information of the first user to the AUSF network element.

The AAA-S may send a first message to the AUSF network element. The first message includes the subscribed user slice information of the first user. The first message may be a slice authorization update message.

Optionally, the AAA-S may send the subscribed user slice information of the first user to the AUSF network element through an AAA-P server. For example, the AAA-S may send the subscribed user slice information of the first user to the AAA-P server, and then the AAA-P server sends the subscribed user slice information of the first user to the AUSF network element.

S802: The AUSF network element sends the subscribed user slice information of the first user to the AMF network element.

The AUSF network element may send a second message to the AMF network element. The second message includes the subscribed user slice information of the first user. The second message may be a slice authorization update message.

S803: The AMF network element determines first user slice information of the first user based on the subscribed user slice information of the first user.

It should be noted that, for a process of performing S803, refer to the process of performing S605. Details are not described herein again.

S804: The AMF network element sends the first user slice information to a terminal device.

The AMF network element may send a third message to the terminal device. The third message includes the first user slice information. The third message may be a configuration update command. Certainly, the third message may alternatively be another message. This is not specifically limited in this embodiment of this application. The third message may be an existing message, or may be a new message.

After receiving the first user slice information, the terminal device may delete previously stored user slice information of the first user, and store the first user slice information. When the third message is the configuration update command, after storing the first user slice information, the terminal device may further send a configuration update complete message to the AMF network element. For example, the third message may carry indication information for indicating whether the terminal device needs to respond to the third message. If the third message carries indication information indicating that the terminal device needs to respond to the third message, the terminal device responds to the third message after receiving the third message. The third message may further carry a response message for indicating whether to enable the terminal device to perform re-registration. If the third message carries a response message indicating the terminal device to perform re-registration, the terminal device further performs a user registration procedure after receiving the third message.

In the embodiment shown in FIG. 8, the AAA-S actively sends the subscribed user slice information of the first user to the AMF network element through the AUSF network element, and the AMF may determine the first user slice information of the first user based on the subscribed user slice information of the first user, and send the first user slice information to the terminal device used by the first user, so that when the first user uses the terminal device, the terminal device may obtain a service from a network side by using a user slice indicated by the first user slice information. In this way, in a process in which different users use a same terminal device, the terminal device may obtain a service from a network side by using a user slice of a current user (a user currently using the terminal device), to provide different services for the different users. Therefore, flexibility of performing communication by using a network slice is improved.

FIG. 9 is a schematic flowchart of still another communication method according to an embodiment of this application. In the embodiment shown in FIG. 9, that a network device is an AMF network element is used as an example for description. With reference to FIG. 9, the method includes the following steps.

S901: An AF network element sends subscribed user slice information of a first user to a UDM network element.

The AF network element first obtains the subscribed user slice information of the first user, and then sends the subscribed user slice information of the first user to the UDM network element. For example, after determining that subscribed user slice information of the first user is updated, the AF network element first obtains the (updated) subscribed user slice information of the first user, and sends the subscribed user slice information of the first user to the UDM network element.

The AF network element may send a first message to the UDM network element. The first message includes the subscribed user slice information of the first user. The first message may be a user slice update message.

Optionally, the AF network element may send the subscribed user slice information of the first user to the UDM network element through an NEF network element. For example, the AF network element may send the subscribed user slice information of the first user to the NEF network element, and then the NEF network element sends the subscribed user slice information of the first user to the UDM network element.

S902: The UDM network element sends the subscribed user slice information of the first user to the AMF network element.

The UDM network element may send a second message to the AMF network element. The second message includes the subscribed user slice information of the first user. The second message may be a user slice update message.

The UDM network element may first determine the AMF network element that serves a terminal device of the first user, and then send the subscribed user slice information of the first user to the AMF network element.

S903: The AMF network element determines first user slice information of the first user based on the subscribed user slice information of the first user.

It should be noted that, for a process of performing S903, refer to the process of performing S605. Details are not described herein again.

S904: The AMF network element sends the first user slice information to the terminal device.

It should be noted that, for a process of performing S904, refer to the process of performing S804. Details are not described herein again.

In the embodiment shown in FIG. 9, the AF network element actively sends the subscribed user slice information of the first user to the AMF network element through the UDM network element, and the AMF may determine the first user slice information of the first user based on the subscribed user slice information of the first user, and send the first user slice information to the terminal device used by the first user, so that when the first user uses the terminal device, the terminal device may obtain a service from a network side by using a user slice indicated by the first user slice information. In this way, in a process in which different users use a same terminal device, the terminal device may obtain a service from a network side by using a user slice of a current user (a user currently using the terminal device), to provide different services for the different users. Therefore, flexibility of performing communication by using a network slice is improved.

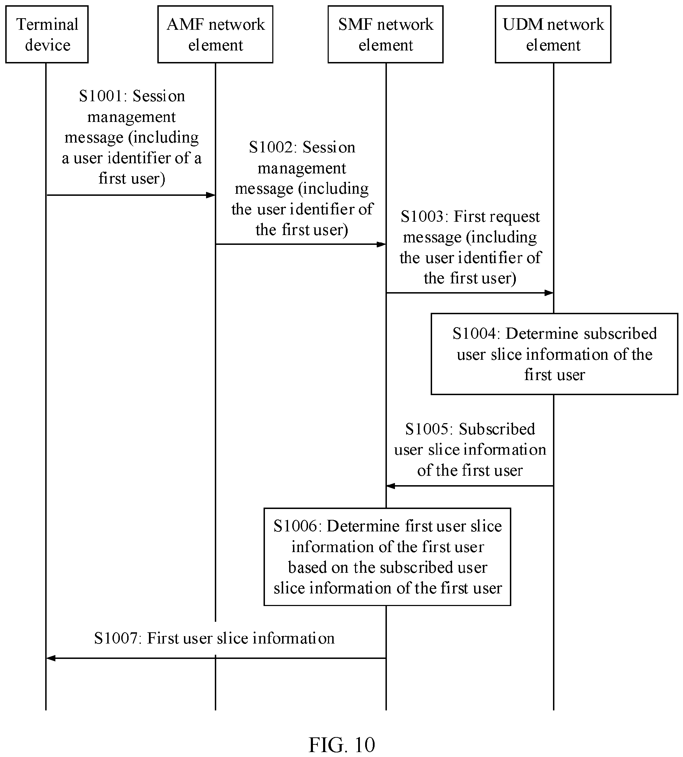

FIG. 10 is a schematic flowchart of yet another communication method according to an embodiment of this application. In the embodiment shown in FIG. 10, that a network device is an SMF network element is used as an example for description. With reference to FIG. 10, the method includes the following steps.

S1001: A terminal device sends a session management message to an AMF network element.

The session management message includes a user identifier of a first user.

For example, the session management message may be a session establishment request message. The session management message may be a NAS message.

It should be noted that, for a process of performing S1001, refer to the process of performing S601. Details are not described herein again. A difference between S1001 and S601 lies in a difference between the session management message and the second request message.

S1002: The AMF network element sends the session management message to the SMF network element.

The session management message includes the user identifier of the first user.

S1003: The SMF network element sends a first request message to a UDM network element.

The first request message includes the user identifier of the first user.

The first request message is for requesting to obtain subscribed user slice information of the first user.

It should be noted that, for a process of performing S1003, refer to the process of performing S602. Details are not described herein again.

S1004: The UDM network element determines the subscribed user slice information of the first user.

S1005: The UDM network element sends the subscribed user slice information of the first user to the SMF network element.

S1006: The SMF network element determines first user slice information of the first user based on the subscribed user slice information of the first user.

S1007: The SMF network element sends the first user slice information to the terminal device.

The SMF network element may send a session management response message to the terminal device. The session management response message includes the first user slice information. The session management response message may be a session establishment response message or a session modification response message.

It should be noted that, for a process of performing S1003 to S1007, refer to the process of performing S602 to S606. Details are not described herein again.

In the embodiment shown in FIG. 10, after the terminal device used by the first user sends the session management message to the SMF network element, the SMF network element may query the UDM network element to obtain the first user slice information of the first user, and send the first user slice information to the terminal device used by the first user, so that when the first user uses the terminal device, the terminal device may obtain a service from a network side by using a user slice indicated by the first user slice information. In this way, in a process in which different users use a same terminal device, the terminal device may obtain a service from a network side by using a user slice of a current user (a user currently using the terminal device), to provide different services for the different users. Therefore, flexibility of performing communication by using a network slice is improved.

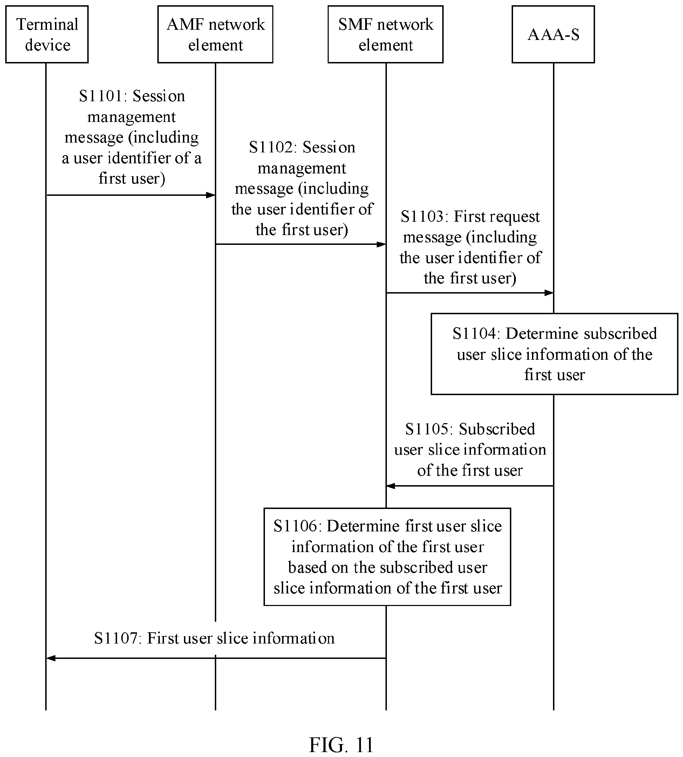

FIG. 11 is a schematic flowchart of still another communication method according to an embodiment of this application. In the embodiment shown in FIG. 11, that a network device is an SMF network element is used as an example for description. With reference to FIG. 11, the method includes the following steps.

S1101: A terminal device sends a session management message to an AMF network element.

The session management message includes a user identifier of a first user.

S1102: The AMF network element sends the session management message to the SMF network element.

It should be noted that, for a process of performing S1101 and S1102, refer to the process of performing S1001 and S1002. Details are not described herein again.

S1103: The SMF network element sends a first request message to an AAA-S.

The first request message includes the user identifier of the first user.

The first request message is for requesting to obtain subscribed user slice information of the first user.

Optionally, the first request message may be a user slice authorization request message.

S1104: The AAA-S obtains the subscribed user slice information of the first user.

It should be noted that, for a process of performing S1104, refer to the process of performing S603. Details are not described herein again. A difference between S1104 and S603 lies in that S1104 and S603 are performed by different bodies.

S1105: The AAA-S sends the subscribed user slice information of the first user to the SMF network element.

Optionally, the AAA-S may send a message including the subscribed user slice information of the first user to the SMF network element. The message may be a response message of the first request message.

S1106: The SMF network element determines first user slice information of the first user based on the subscribed user slice information of the first user.

S1107: The AMF network element sends the first user slice information to the terminal device.

The SMF network element may send a session management response message to the terminal device. The session management response message includes the first user slice information. The session management response message may be a session establishment response message or a session modification response message.

It should be noted that, for a process of performing S1106 and S1107, refer to the process of performing S605 and S606. Details are not described herein again.

After receiving the first user slice information, the terminal device may delete previously stored user slice information of the first user, and store the first user slice information.

In the embodiment shown in FIG. 11, after the terminal device used by the first user sends the session management message to the SMF network element, the SMF network element may query the AAA-S to obtain the first user slice information of the first user, and send the first user slice information to the terminal device used by the first user, so that when the first user uses the terminal device, the terminal device may obtain a service from a network side by using a user slice indicated by the first user slice information. In this way, in a process in which different users use a same terminal device, the terminal device may obtain a service from a network side by using a user slice of a current user (a user currently using the terminal device), to provide different services for the different users. Therefore, flexibility of performing communication by using a network slice is improved.

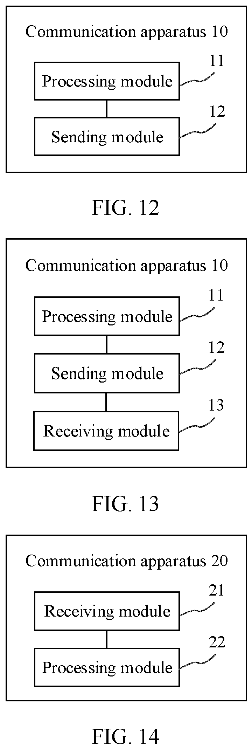

FIG. 12 is a schematic diagram of a structure of a communication apparatus according to an embodiment of this application. With reference to FIG. 12, the communication apparatus 10 may include a processing module 11 and a sending module 12.

The processing module 11 is configured to determine first user slice information of a first user.

The sending module 12 is configured to send the first user slice information to a terminal device, where the terminal device is a terminal device used by the first user, and a user slice indicated by the first user slice information is a user slice used by the first user.

Optionally, the processing module 11 may perform S501 in the embodiment of FIG. 5, S605 in the embodiment of FIG. 6, S707 in the embodiment of FIG. 7, S803 in the embodiment of FIG. 8, S903 in the embodiment of FIG. 9, S1006 in the embodiment of FIG. 10, and S1106 in the embodiment of FIG. 11.

Optionally, the sending module 12 may perform S502 in the embodiment of FIG. 5, S602 and S606 in the embodiment of FIG. 6, S702 and S708 in the embodiment of FIG. 7, S804 in the embodiment of FIG. 8, S904 in the embodiment of FIG. 9, S1003 and S1007 in the embodiment of FIG. 10, and S1103 and S1107 in the embodiment of FIG. 11.

It should be noted that the communication apparatus 10 shown in this embodiment of this application may perform the technical solutions shown in the foregoing method embodiments. Implementation principles and beneficial effects of the communication apparatus 10 are similar to those of the technical solutions, and details are not described herein again.

In a possible implementation, the first user slice information includes user slice information configured for the first user and/or user slice information allowed to be used by the first user.

FIG. 13 is a schematic diagram of a structure of another communication apparatus according to an embodiment of this application. On the basis of the embodiment shown in FIG. 12, with reference to FIG. 13, the communication apparatus 10 may further include a receiving module 13.

The receiving module 13 is configured to receive subscribed user slice information of the first user from a first device.

The processing module 11 is specifically configured to determine the first user slice information based on the subscribed user slice information of the first user.

In a possible implementation, the sending module 12 is further configured to send a first request message to the first device before the receiving module 13 receives the subscribed user slice information of the first user from the first device, where the first request message is for requesting to obtain the subscribed user slice information of the first user, and the first request message includes a user identifier of the first user.

In a possible implementation, the first device is a unified data management UDM network element or an authentication, authorization, and accounting AAA server.

In a possible implementation, the receiving module 13 is further configured to receive, before the processing module 11 determines the first user slice information of the first user, a second request message sent by the terminal device, where the second request message includes the user identifier of the first user, and the second request message is for requesting to obtain the first user slice information of the first user.

In a possible implementation, the second request message further includes second user slice information, and the second user slice information includes one or more of the following information:
preset user slice information in the user slice information configured for the first user;
the user slice information configured for the first user, or a part of the user slice information configured for the first user; and
the user slice information allowed to be used by the first user, or a part of the user slice information allowed to be used by the first user.

In a possible implementation, the second request message further includes an identifier of the terminal device.

In a possible implementation, the first user slice information is determined by the network device based on the subscribed user slice information of the first user and at least one of the following information:
a registration area of the terminal device;
a user slice supported by the network device;
a capability of a base station serving the terminal device; and
load information of a subscribed user slice instance of the first user.

In a possible implementation, the first user slice information is marked default user slice information in the subscribed user slice information of the first user.

In a possible implementation, the second request message further includes first indication information, and the first indication information is for requesting the first user slice information of the first user.

In a possible implementation, the second request message further includes an identifier of a slice provider, and the first user slice information is user slice information provided by the slice provider.

In a possible implementation, the first user slice information is user slice information corresponding to a public land mobile network PLMN in which the terminal device is located.

In a possible implementation, the network device is an AMF network element or an SMF network element.

It should be noted that the communication apparatus 10 shown in this embodiment of this application may perform the technical solutions shown in the foregoing method embodiments. Implementation principles and beneficial effects of the communication apparatus 10 are similar to those of the technical solutions, and details are not described herein again.

FIG. 14 is a schematic diagram of a structure of still another communication apparatus according to an embodiment of this application. With reference to FIG. 14, the communication apparatus 20 may include a receiving module 21 and a processing module 22.

The receiving module 21 is configured to receive first user slice information of a first user that is sent by a network device, where a user slice indicated by the first user slice information is a user slice used by the first user.

The processing module 22 is configured to determine the first user slice information as user slice information of the first user.

Optionally, the receiving module 21 may perform S502 in the embodiment of FIG. 5, S606 in the embodiment of FIG. 6, S708 in the embodiment of FIG. 7, S804 in the embodiment of FIG. 8, S904 in the embodiment of FIG. 9, S1007 in the embodiment of FIG. 10, and S1107 in the embodiment of FIG. 11.

Optionally, the processing module 22 may perform S503 in the embodiment of FIG. 5.

It should be noted that the communication apparatus 20 shown in this embodiment of this application may perform the technical solutions shown in the foregoing method embodiments. Implementation principles and beneficial effects of the communication apparatus 20 are similar to those of the technical solutions, and details are not described herein again.

In a possible implementation, the first user slice information includes user slice information that is of a user slice and that is configured for the first user and/or user slice information that is of a user slice and that is allowed to be used by the first user.

In a possible implementation, the first user slice information is determined by the network device in subscribed user slice information of the first user based on at least one of the following information:
a registration area of the terminal device;
a user slice supported by the network device;
a capability of a base station serving the terminal device; and
load information of a subscribed user slice instance of the first user.

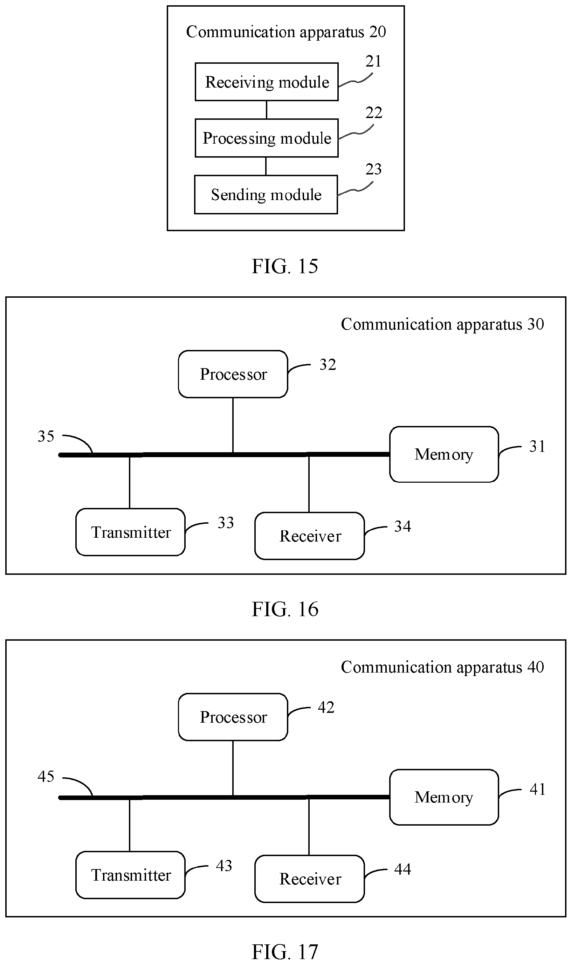

FIG. 15 is a schematic diagram of a structure of yet another communication apparatus according to an embodiment of this application. On the basis of the embodiment shown in FIG. 14, with reference to FIG. 15, the communication apparatus 20 further includes a sending module 23.

The sending module 23 is configured to send a request message to the network device before the receiving module 21 receives the first user slice information of the first user that is sent by the network device, where the request message includes a user identifier of the first user, and the request message is for requesting the first user slice information of the first user.

In a possible implementation, the request message further includes an identifier of the terminal device.

In a possible implementation, the request message further includes second user slice information, and the second user slice information includes one or more of the following information:
preset user slice information in the user slice information configured for the first user;
the user slice information configured for the first user, or a part of the user slice information configured for the first user; and
the user slice information allowed to be used by the first user, or a part of the user slice information allowed to be used by the first user.

In a possible implementation, the request message further includes first indication information, and the first indication information is for requesting the first user slice information of the first user.

In a possible implementation, the request message further includes an identifier of a slice provider, and the first user slice information is user slice information provided by the slice provider.

In a possible implementation, the first user slice information is user slice information corresponding to a public land mobile network PLMN in which the terminal device is located.

In a possible implementation, the network device is an AMF network element or an SMF network element.

FIG. 16 is a schematic diagram of a hardware structure of a communication apparatus according to this application. The communication apparatus may be a network device, for example, an AMF network element or an SMF network element. With reference to FIG. 16, the communication apparatus 30 includes a memory 31, a processor 32, a transmitter 33, and a receiver 34. The memory 31 communicates with the processor 32. For example, the memory 31 communicates with the processor 32 through a communication bus 35. The memory 31 is configured to store a computer program, and the processor 32 executes the computer program to implement the methods shown in the foregoing embodiments.

It should be noted that the transmitter 33 and the receiver 34 may be optional, that is, the communication apparatus 30 may include one or more of the transmitter 33 or the receiver 34.

Optionally, the processor 32 may implement functions of the processing module 11 in the embodiments of FIG. 12 and FIG. 13.

Optionally, the transmitter 33 may implement functions of the sending module 12 in the embodiments of FIG. 12 and FIG. 13.

Optionally, the receiver 34 may implement a function of the receiving module 13 in the embodiment of FIG. 13.

FIG. 17 is a schematic diagram of a hardware structure of another communication apparatus according to this application. The communication apparatus may be a terminal device. With reference to FIG. 17, the communication apparatus 40 includes a memory 41, a processor 42, a transmitter 43, and a receiver 44. The memory 41 communicates with the processor 42. For example, the memory 41 communicates with the processor 42 through a communication bus 45. The memory 41 is configured to store a computer program, and the processor 42 executes the computer program to implement the methods shown in the foregoing embodiments.

It should be noted that the transmitter 43 and the receiver 44 may be optional, that is, the communication apparatus 40 may include one or more of the transmitter 43 or the receiver 44.

Optionally, the processor 42 may implement functions of the processing module 22 in the embodiments of FIG. 14 and FIG. 15.

Optionally, the transmitter 43 may implement a function of the sending module 23 in the embodiment of FIG. 15.

Optionally, the receiver 44 may implement functions of the receiving module 21 in the embodiments of FIG. 14 and FIG. 15.

Optionally, the processor may be a central processing unit (central processing unit, CPU), or may be another general-purpose processor, a digital signal processor (digital signal processor, DSP), an application-specific integrated circuit (application-specific integrated circuit, ASIC), or the like. The general-purpose processor may be a microprocessor, or the processor may be any conventional processor, or the like. The steps of the methods disclosed with reference to this application may be directly implemented by a hardware processor, or may be implemented by a combination of hardware and a software module in a processor.

This application provides a computer-readable storage medium, including instructions. When the instructions are run on a computer, the computer is enabled to perform the communication method provided in any one of the foregoing method embodiments.

This application provides a chip. The chip is configured to support a device (for example, a terminal device or a network device) in implementing a function shown in embodiments of this application. The chip is specifically used in a chip system. The chip system may include the chip, or may include the chip and another discrete component. When the foregoing methods are implemented by using the chip in the device, the chip includes a processing unit. Further, the chip may further include a communication unit. The processing unit may be, for example, a processor. When the chip includes the communication unit, the communication unit may be, for example, an input/output interface, a pin, or a circuit. The processing unit performs all or some of actions performed by processing modules in embodiments of this application, and the communication unit may perform a corresponding receiving or sending action. In another specific embodiment, a processing module of a device in this application may be the processing unit of the chip, and a receiving module or a sending module may be the communication unit of the chip.

All or some of the steps of the foregoing method embodiments may be implemented by a program instructing related hardware. The foregoing program may be stored in a readable memory. When the program is executed, the steps in the method embodiments are performed. The memory (storage medium) includes: a read-only memory (English: read-only memory, ROM for short), a RAM, a flash memory, a hard disk, a solid-state drive, a magnetic tape (English: magnetic tape), a floppy disk (English: floppy disk), an optical disc (English: optical disc), and any combination thereof.

Embodiments of this application are described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processing unit of another programmable data processing device to generate a machine, so that the instructions executed by the computer or the processing unit of the another programmable data processing device generate an apparatus for implementing a specified function in one or more processes in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specified function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specified function in one or more processes in the flowcharts and/or in one or more blocks in the block diagrams.

Clearly, a person skilled in the art can make various modifications and variations to embodiments of this application without departing from the spirit and scope of this application. In this way, this application is intended to cover these modifications and variations of embodiments of this application provided that they fall within the scope of protection defined by the following claims and their equivalent technologies.

In this application, the term "including" and a variant thereof may refer to non-limitative inclusion; the term "or" and a variant thereof may refer to "and/or". In this application, the terms "first", "second", and the like are intended to distinguish between similar objects but do not necessarily indicate a specific order or sequence. The term "a plurality of' in this application refers to two or more than two. The term "and/or" describes an association relationship for describing associated objects and represents that three relationships may exist. For example, A and/or B may represent the following three cases: Only A exists, both A and B exist, and only B exists. The character "/" generally represents an "or" relationship between the associated objects.

## Claims

1. A communication method, comprising:
determining, by a network device, first user slice information of a first user; and
sending, by the network device, the first user slice information to a terminal device, wherein the terminal device is a terminal device used by the first user, and a user slice indicated by the first user slice information is a user slice used by the first user.

2. The method according to claim 1, wherein the first user slice information comprises user slice information configured for the first user and/or user slice information allowed to be used by the first user.

3. The method according to claim 1 or 2, wherein the determining, by a network device, first user slice information of a first user comprises:
receiving, by the network device, subscribed user slice information of the first user from a first device; and
determining, by the network device, the first user slice information based on the subscribed user slice information of the first user.

4. The method according to claim 3, wherein before the receiving, by the network device, subscribed user slice information of the first user from a first device, the method further comprises:
sending, by the network device, a first request message to the first device, wherein the first request message is for requesting to obtain the subscribed user slice information of the first user, and the first request message comprises a user identifier of the first user.

5. The method according to any one of claims 1 to 4, wherein before the determining, by a network device, first user slice information of a first user, the method further comprises:
receiving, by the network device, a second request message from the terminal device, wherein the second request message comprises the user identifier of the first user, and the second request message is for requesting to obtain the first user slice information of the first user.

6. The method according to claim 5, wherein the second request message further comprises second user slice information, and the second user slice information comprises one or more of the following information:
preset user slice information in the user slice information configured for the first user;
the user slice information configured for the first user, or a part of the user slice information configured for the first user; and
the user slice information allowed to be used by the first user, or a part of the user slice information allowed to be used by the first user.

7. The method according to claim 5 or 6, wherein the second request message further comprises an identifier of the terminal device.

8. The method according to any one of claims 3 to 6, wherein the first user slice information is determined by the network device based on the subscribed user slice information of the first user and at least one of the following information:
a registration area of the terminal device;
a user slice supported by the network device;
a capability of a base station serving the terminal device; and
load information of a subscribed user slice instance of the first user.

9. The method according to claim 6 or 7, wherein the second request message further comprises an identifier of a slice provider, and the first user slice information is user slice information provided by the slice provider.

10. The method according to any one of claims 1 to 9, wherein the first user slice information is user slice information corresponding to a public land mobile network PLMN in which the terminal device is located.

11. The method according to any one of claims 1 to 10, wherein the network device is an AMF network element or an SMF network element.

12. A communication method, comprising:
receiving, by a terminal device, first user slice information of a first user from a network device, wherein a user slice indicated by the first user slice information is a user slice used by the first user; and
determining, by the terminal device, the first user slice information as user slice information of the first user.

13. The method according to claim 12, wherein the first user slice information comprises user slice information that is of a user slice and that is configured for the first user and/or user slice information that is of a user slice and that is allowed to be used by the first user.

14. The method according to claim 12 or 13, wherein the first user slice information is determined by the network device in subscribed user slice information of the first user based on at least one of the following information:
a registration area of the terminal device;
a user slice supported by the network device;
a capability of a base station serving the terminal device; and
load information of a subscribed user slice instance of the first user.

15. The method according to any one of claims 12 to 14, wherein before the receiving, by a terminal device, first user slice information of a first user from a network device, the method further comprises:
sending, by the terminal device, a request message to the network device, wherein the request message comprises a user identifier of the first user, and the request message is for requesting the first user slice information of the first user.

16. The method according to claim 15, wherein the request message further comprises second user slice information, and the second user slice information comprises one or more of the following information:
preset user slice information in the user slice information configured for the first user;
the user slice information configured for the first user, or a part of the user slice information configured for the first user; and
the user slice information allowed to be used by the first user, or a part of the user slice information allowed to be used by the first user.

17. A communication apparatus, comprising a processing module and a sending module, wherein
the processing module is configured to determine first user slice information of a first user; and
the sending module is configured to send the first user slice information to a terminal device, wherein the terminal device is a terminal device used by the first user, and a user slice indicated by the first user slice information is a user slice used by the first user.

18. The apparatus according to claim 17, wherein the first user slice information comprises user slice information configured for the first user and/or user slice information allowed to be used by the first user.

19. The apparatus according to claim 17 or 18, further comprising a receiving module, wherein
the receiving module is configured to receive subscribed user slice information of the first user from a first device; and
the processing module is specifically configured to determine the first user slice information based on the subscribed user slice information of the first user.

20. The apparatus according to claim 19, wherein
the sending module is further configured to send a first request message to the first device before the receiving module receives the subscribed user slice information of the first user from the first device, wherein the first request message is for requesting to obtain the subscribed user slice information of the first user, and the first request message comprises a user identifier of the first user.

21. The apparatus according to any one of claims 17 to 20, wherein
the receiving module is further configured to receive, before the processing module determines the first user slice information of the first user, a second request message from the terminal device, wherein the second request message comprises the user identifier of the first user, and the second request message is for requesting to obtain the first user slice information of the first user.

22. The apparatus according to claim 21, wherein the second request message further comprises second user slice information, and the second user slice information comprises one or more of the following information:
preset user slice information in the user slice information configured for the first user;
the user slice information configured for the first user, or a part of the user slice information configured for the first user; and
the user slice information allowed to be used by the first user, or a part of the user slice information allowed to be used by the first user.

23. The apparatus according to any one of claims 19 to 22, wherein the first user slice information is determined by the network device based on the subscribed user slice information of the first user and at least one of the following information:
a registration area of the terminal device;
a user slice supported by the network device;
a capability of a base station serving the terminal device; and
load information of a subscribed user slice instance of the first user.

24. A communication apparatus, comprising a receiving module and a processing module, wherein
the receiving module is configured to receive first user slice information of a first user from a network device, wherein a user slice indicated by the first user slice information is a user slice used by the first user; and
the processing module is configured to determine the first user slice information as user slice information of the first user.

25. The apparatus according to claim 24, wherein the first user slice information comprises user slice information that is of a user slice and that is configured for the first user and/or user slice information that is of a user slice and that is allowed to be used by the first user.

26. The apparatus according to claim 24 or 25, wherein the first user slice information is determined by the network device in subscribed user slice information of the first user based on at least one of the following information:
a registration area of the terminal device;
a user slice supported by the network device;
a capability of a base station serving the terminal device; and
load information of a subscribed user slice instance of the first user.

27. The apparatus according to any one of claims 24 to 26, further comprising a sending module, wherein
the sending module is configured to send a request message to the network device before the receiving module receives the first user slice information of the first user from the network device, wherein the request message comprises a user identifier of the first user, and the request message is for requesting the first user slice information of the first user.

28. A communication apparatus, comprising a memory and a processor, wherein the processor executes program instructions in the memory, to implement the communication method according to any one of claims 1 to 11.

29. A communication apparatus, comprising a memory and a processor, wherein the processor executes program instructions in the memory, to implement the communication method according to any one of claims 12 to 16.

30. A readable storage medium, wherein the storage medium is configured to store a computer program, and the computer program is for implementing the communication method according to any one of claims 1 to 16.
